# EUROPEAN PATENT SPECIFICATION

(11) **EP 1 742 079 B1**
(45) Date of publication and mention of the grant of the patent: **17.06.2009**
(21) Application number: 06012512.7
(22) Date of filing: 19.06.2006
(51) Int. Cl.: G01S 5/10, G01S 5/02

(54) **Position measuring system and method using wireless broadband (WiBro) signal**
System und Verfahren zur Positionsmessung mittels drahtlosem Breitbandsignal (WiBro)
Système de mesure de la position et procédé utilisant un signal sans fil de large bande passante (WiBro)

(30) Priority: 04.07.2005 KR 20050059931; 18.04.2006 KR 20060035152
(43) Date of publication of application: 10.01.2007
(60) Divisional application: 07018112.8
(73) Proprietor: Samsung Electronics Co., Ltd., Suwon-si, Gyeonggi-Do (KR); Seoul National University Industry Foundation, Seoul (KR)
(72) Inventor: Hyun, Moon-Pil c/o Samsung Electronics Co.,Ltd., Yeongtong-gu Suwon-si Gyeonggi-do (KR); Jung, Hee c/o Samsung Electronics Co.,Ltd., Yeongtong-gu Suwon-si Gyeonggi-do (KR); Kim, Jin-Won c/o Samsung Electronics Co.,Ltd., Yeongtong-gu Suwon-si Gyeonggi-do (KR); Hong, Hyun-Su c/o Samsung Electronics Co.,Ltd., Yeongtong-gu Suwon-si Gyeonggi-do (KR); Lee, Jang-Gyu Electrical Engineering Department, Gwanak-gu, Seoul (KR)
(74) Representative: Grünecker, Kinkeldey, Stockmair & Schwanhäusser Anwaltssozietät

(56) References cited:
- WO-A-02/17669
- US-A1- 2005 020 309
- US-B1- 6 230 018
- US-B1- 6 356 763

## Description

The present invention generally relates to a Wireless Broadband (WiBro) system, and in particular, to a system and method for measuring the position of a terminal in a WiBro system.

Generally, when a mobile station moves from a cell of a serving base station (or sector) to a cell of a target base station (or sector), a mobile communication system performs a hand-over (or hand-off) in which a communication path is switched to the cell of the target base station using a specific signal to continue communication.

For example, in a Code Division Multiple Access (CDMA) system, a range between a base station and a terminal is calculated using a Round Trip Delay (RTD) signal transmitted from the base station to the terminal and a hand-over to a base station that is nearest to the terminal is performed. This method is based on the fact that in a context where all base stations operate with the same absolute time, if it takes time t for a signal from a base station to arrive in a terminal, it also takes time t for the terminal to send a signal to the base station (communication paths for transmission/reception are the same) and thus a signal delay between the terminal and the base station is 2t.

The RTD is based on the distance between the base station and the terminal. Thus, the RTD can be used for not only a hand-over but also measurement of the position of the terminal. However, to measure the position of the terminal using the RTD, a single base station needs to measure RTDs for at least three terminals, or at least three base stations needs to simultaneously receive a signal from a single terminal.

Thus, in terminal position measurement using the RTD, a clock error between terminals may occur and a base station needs to then have a new positioning algorithm. As a result, the current CDMA system has difficulty in measuring the position of a terminal using the RTD.

US 6,356,763 describes that a mobile communication station in a wireless communication network is used to measure the respective times of arrival of radio signals respectively transmitted by a plurality of radio transmitters in the network. The mobile communication station is provided with real time difference information indicative of differences between a time base used by a radio transmitter serving the mobile communication station and respective time bases used by the other radio transmitters. The mobile communication station determines, in response to the real time difference information and relative to the time base used by the radio transmitter serving the mobile communication station, a plurality of points in time at which the respective radio signals are expected to arrive at the mobile communication station. For each radio signal, the mobile communication station monitors for arrival of the radio signal during a period of time after the point in time at which the radio signal is expected to arrive.

WO 02/17669 A1 provides a method for positioning a mobile station applying a principle based on signal propagation time differences so that the method uses in the radio signal propagation time measurement those base stations which either do not have functioning repeaters in their coverage areas or, if there are not enough such base stations, the base station delays will be compensated for.

US 2005/0020309 A1 suggests a method and apparatus for creating and using a base station almanac for position determination is described. The base station almanac includes a number of records, where each record can describe a sector or a transmitter (e.g., a base station or a repeater) in a wireless communication network. Each record includes a protocol type field that indicates the one or more protocols supported by the record. Each record also includes a unique sector identifier for the sector/transmitter for each supported protocol, where each identifier is defined based on the associated protocol. A record may also include multiple maximum antenna ranges (MARs), where each MAR is associated with a respective reference power level. One of the multiple MARs can be selected for use for position determination depending on received signal strength.

In a Wireless Broadband (WiBro) system, a hand-over between a base station and a terminal is performed using relative delay information. The relative delay information is used only as a parameter for synchronizing the terminal with a new base station during the hand-over.

The relative delay information is also based on the distance between the terminal and the base station but is not used for measurement of the position of the terminal. Thus, the relative delay may be used for calculation of the position of the terminal.

If the relative delay information is used, the position of the terminal would be more easily measured because it is not necessary for a single base station to measure RTDs for at least three terminals, or for at least three base stations to simultaneously receive a signal from a single terminal.

It is, therefore, the object of the present invention to provide a system and method for measuring the position of a terminal using a hand-over parameter of a WiBro signal.

This object is solved by the subject matter of the independent claims.

Preferred embodiments are defined in the dependent claims.

It is an aspect of the present invention to provide a system and method for measuring the position of a terminal using relative delay information of a WiBro signal.

According to one aspect of the present invention, there is provided a position measuring system using a WiBro signal. The position measuring system includes a main base station for providing information about neighboring base stations and transmitting a neighboring base station scan result from a terminal, the terminal for receiving the information about the neighboring base stations, scanning the neighboring base stations in response to a position measurement request, and transmitting the neighboring base station scan result, and a Position Determination Entity (PDE) for measuring the position of the terminal using relative delay information between the main base station and the neighboring base stations, which is included in the neighboring base station scan result, and base station position information.

According to another aspect of the present invention, there is provided a position measuring system using a WiBro signal. The position measuring system includes a PDE for providing base station position information, a main base station for providing information about neighboring base stations, and a terminal for scanning the neighboring base stations in response to a position measurement request, measuring relative delay information between the main base station and the neighboring base stations, and measuring its position using the relative delay information and the base station position information provided from the PDE.

According to further another aspect of the present invention, there is provided a position measuring method using a WiBro signal. The position measuring method includes a main base station providing to a terminal information about neighboring base stations, the terminal scanning the neighboring base stations and transmitting a neighboring base station scan result to a PDE, and a PDE measuring the position of the terminal using relative delay information between the main base station and the neighboring base stations, which is included in the neighboring base station scan result, and previously stored base station position information.

According to still another aspect of the present invention, there is provided a position measuring method using a WiBro signal. The position measuring method includes a main base station providing to a terminal information about neighboring base stations, the terminal scanning the neighboring base stations and transmitting a neighboring base station scan result to a PDE, and a PDE measuring the position of the terminal using relative delay information between the main base station and the neighboring base stations, which is included in the neighboring base station scan result, and previously stored base station position information.

The above and other objects, features and advantages of the present invention will become more apparent from the following detailed description when taken in conjunction with the accompanying drawings in which:
FIG. 1 illustrates a MOB_SCN_REPORT message in a WiBro system;
FIG. 2 is a diagram used to illustrate relative delay information according to the present invention;
FIG. 3 illustrates a position measuring system using relative delay information according to the present invention;
FIG. 4 is a flowchart illustrating a position measuring method using relative delay information according to a first embodiment of the present invention;
FIG. 5 is a flowchart illustrating a position measuring method using relative delay information according to a second embodiment of the present invention;
FIG. 6 is a flowchart illustrating a position measuring method using relative delay information according to a third embodiment of the present invention;
FIG. 7 is a flowchart illustrating a position measuring method using relative delay information according to a fourth embodiment of the present invention;
FIG. 8 is a flowchart illustrating a position measuring method using relative delay information according to a fifth embodiment of the present invention;
FIG. 9 illustrates the structure of a MOB_NBR_ADV message according to the present invention;
FIG. 10 illustrates the structure of a MOB_SCN_REQ message according to the present invention;
FIG. 11 illustrates the structure of a MOB_SCN_RSP message according to the present invention;
FIG. 12 illustrates the structure of a MOB_SCN_REPORT message according to the present invention;
FIG. 13 is a flowchart illustrating a position measuring method using relative delay information according to a sixth embodiment of the present invention;
FIG. 14 is a flowchart illustrating a position measuring method using relative delay information according to a seventh embodiment of the present invention;
FIG. 15 is a flowchart illustrating a position measuring method using relative delay information according to an eighth embodiment of the present invention;
FIG. 16 is a flowchart illustrating a position measuring method using relative delay information according to a ninth embodiment of the present invention; and
FIG. 17 is a flowchart illustrating a position measuring method using relative delay information according to a tenth embodiment of the present invention.

Preferred embodiments of the present invention will now be described in detail with reference to the annexed drawings. In the following description, a detailed description of known functions and configurations incorporated herein has been omitted for conciseness.

A position measuring system according to the present invention measures the position of a terminal using relative delay information that is a hand-over parameter of a WiBro signal.

In a WiBro system, in a hand-over, a terminal receives neighboring base station information from a main base station, scans its neighboring base stations if it is determined that it is necessary to do so, and transmits the scan result to the main base station through a MOB_SCN_REPORT message that includes the scan result.

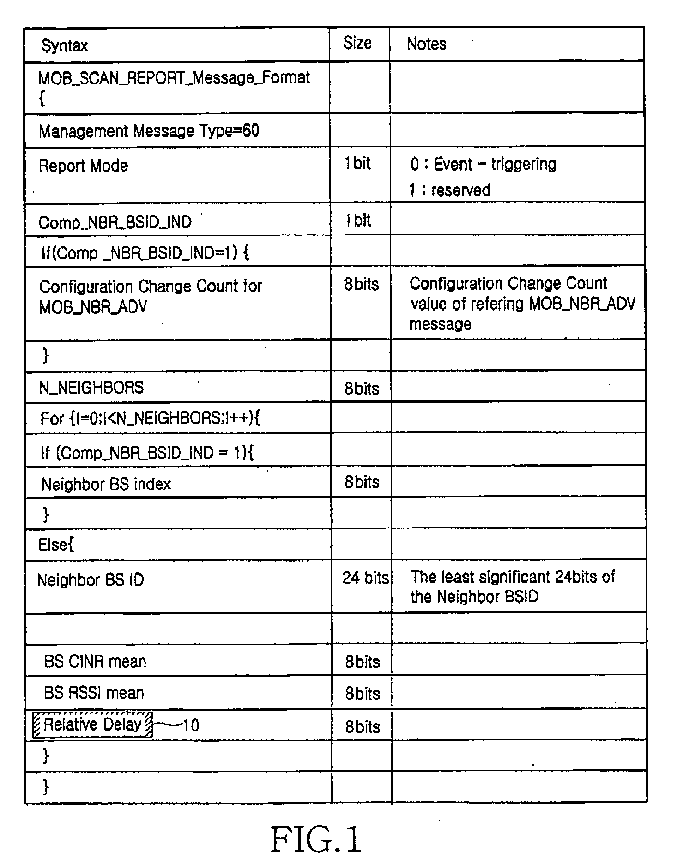

FIG. 1 illustrates the MOB_SCN_REPORT message in the WiBro system. Referring to FIG. 1, the MOB_SCN_REPORT message includes parameters such as Neighbor BS ID, BS CINR mean, BS RSSI mean, and Relative Delay as part of the scan result. Theses parameters are used during a hand-over.

In particular, Relative Delay 10 indicates the relative delay of a downlink signal transmitted from a neighboring base station of a terminal with respect to a downlink signal transmitted from a main base station. In other words, the Relative Delay 10 implies a difference between the time required for the downlink signal of the main base station to arrive in the terminal and the time required for the downlink signal from the neighboring base station to arrive in the terminal.

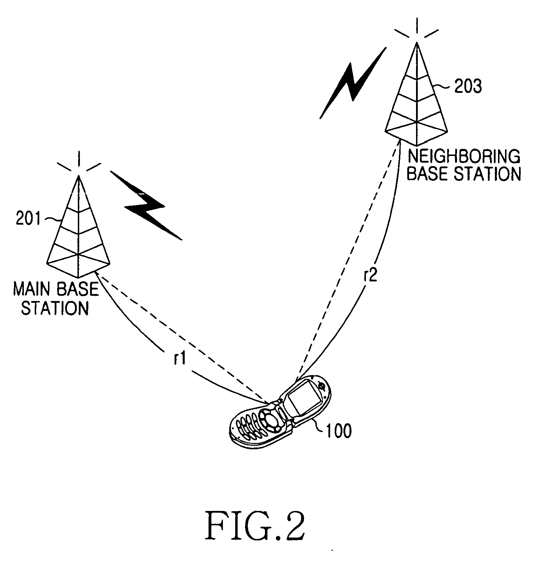

FIG. 2 is a diagram used to illustrate relative delay information according to the present invention.

Referring to FIG. 2, a terminal 100 receives downlink signals from a main base station 201 and a neighboring base station 203. Since a distance r1 between the terminal 100 and the main base station 201 and a distance r2 between the terminal 100 and the neighboring base station 203 are different from each other, the two downlink signals received by the terminal 100 has a signal delay difference corresponding to a distance difference of (r2-r1). Information about the signal delay difference between the main base station 201 and the neighboring base station 203 is the relative delay information.

Thus, the distance difference (r2-r1) can be acquired using the relative delay information.

Therefore, a position measuring system according to the present invention calculates the distance difference, i.e., a difference between a distance between a main base station and a terminal and a distance between a neighboring base station and the terminal, using the relative delay information and measures the position of the terminal using the calculated distance difference.

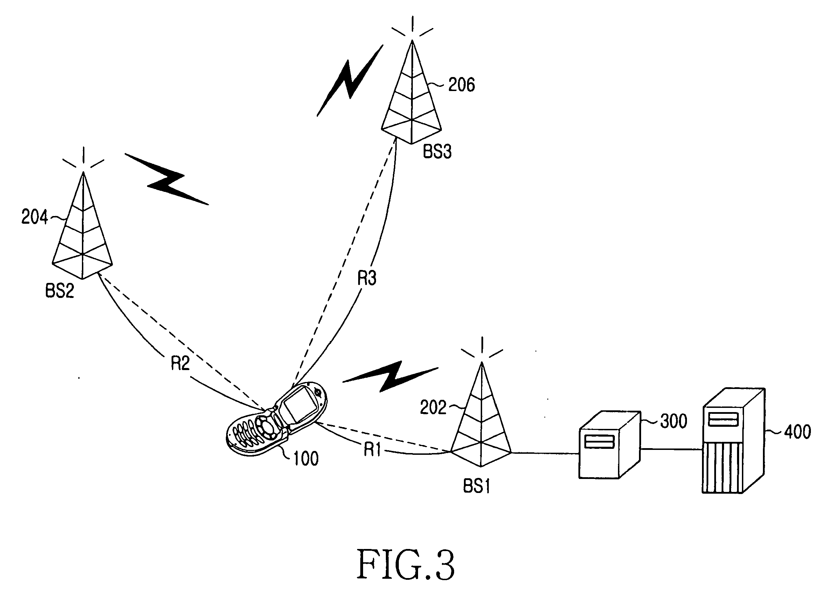

FIG. 3 illustrates a position measuring system using relative delay information according to the present invention. Referring to FIG. 3, the position measuring system includes a terminal 100, a main base station (BS1) 202, neighboring base stations (BS2 and BS3) 204 and 206, a control station 300, and a Position Determination Entity (PDE) 400.

The main base station 202 communicates with the terminal 100 and provides information about the neighboring base stations 204 and 206. The terminal 100 determines whether it is necessary to scan the neighboring base stations 204 and 206 in response to a position measurement request. If it is necessary to scan the neighboring base stations 204 and 206, the terminal 100 transmits to the communicating main base station 202 a request for information required to scan the neighboring base stations 204 and 206, receives the information from the main base station 202, and scans the neighboring base stations 204 and 206. The information required for the scan includes the time required to scan the neighboring base stations 204 and 206, the number of scan operations, and a scan result reporting mode.

After scanning the neighboring base stations 204 and 206, the terminal 100 transmits the scan result to the main base station 202. The scan result includes relative delay information indicating a difference between time T₀ required for a downlink signal of the main base station 202 to arrive in the terminal 100 and time T₁ required for a downlink signal from the neighboring base station 204 to arrive in the terminal 100, a difference between time T₀ and time T₂ required for a downlink signal from the neighboring base station 206 to arrive in the terminal 100, and base station ID information.

The main base station 202 transmits to the control station 300 the scan result from the terminal 100.

The control station 300 delivers the received scan result to the PDE 400.

Upon receipt of the scan result from the control station 300, the PDE 400 extracts the relative delay information and the base station ID information from the received scan result and measures the position of the terminal 100 using the relative delay information and the position information of the base stations 202, 204, and 206 corresponding to the base station ID information.

Referring to FIG. 3, the PDE 400 calculates a distance difference of (R1-R2) between the distance R1 between the main base station 202 and the terminal 100 and the distance R2 between the neighboring base station 204 and the terminal 100, and a distance difference of (R1-R3) between the distance R1 and the distance R3 between the neighboring base station 206 and the terminal 100, each using the relative delay information. The PDE 400 may calculate the position of the terminal 100 using a trigonometric measurement method with the relative delay information and the position information of the base stations 202, 204, and 206 corresponding to the base station ID information. The PDE 400 requires at least two pieces of relative delay information to measure the position of the terminal 100. Although the PDE 400 may calculate the position of the terminal 100 and transmit the calculated position to the terminal 100 as described above, the terminal 100 may measure its position using relative delay information through a position measurement application implemented therein.

As mentioned above, since the position measuring system according to the present invention measures the position of the terminal using relative delay information used in a hand-over, it does not require additional data measurement for positioning and can use a parameter that helps the hand-over for position measurement.

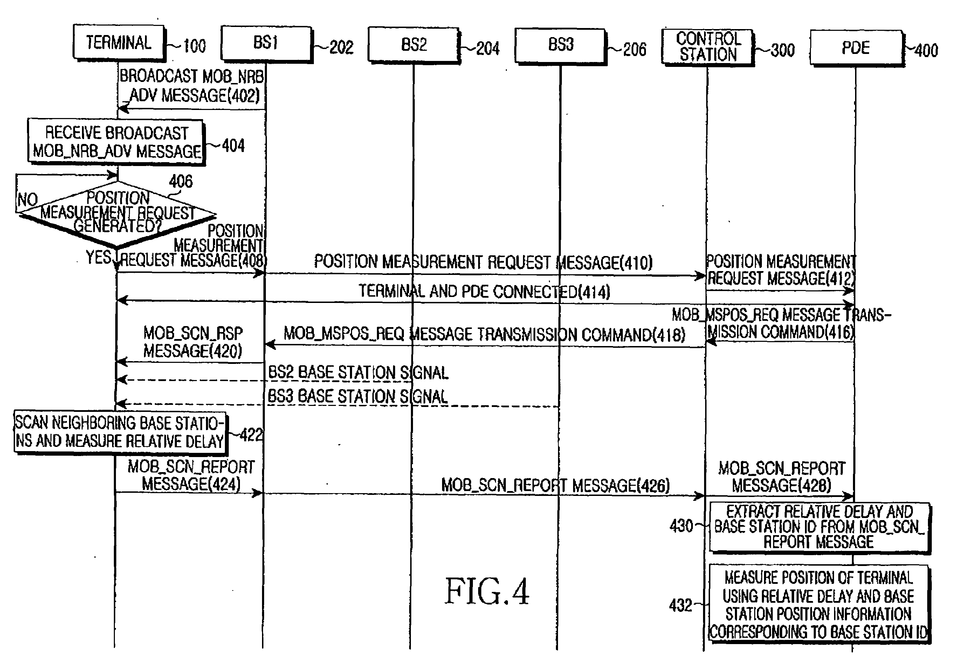

FIG. 4 is a flowchart illustrating a position measuring method using relative delay information according to a first embodiment of the present invention. In FIG. 4, the terminal 100 requests position measurement and, when a WiBro network is used, a position measurement request from the terminal 100 and a neighboring base station scan result are delivered to the PDE 400 through the main base station (BS1) 202 and the control station 300. The main base station (BS1) 202 broadcasts a MOB_NBR_ADV message including information about its neighboring base stations (BS2 and BS3) 204 and 206 in step 402. The MOB_NBR_ADV message may be used when a position measurement request is generated by a need to measure the position of the terminal 100 or a need for the main base station 202 to secure a measurement value required for measuring the position of the terminal 100.

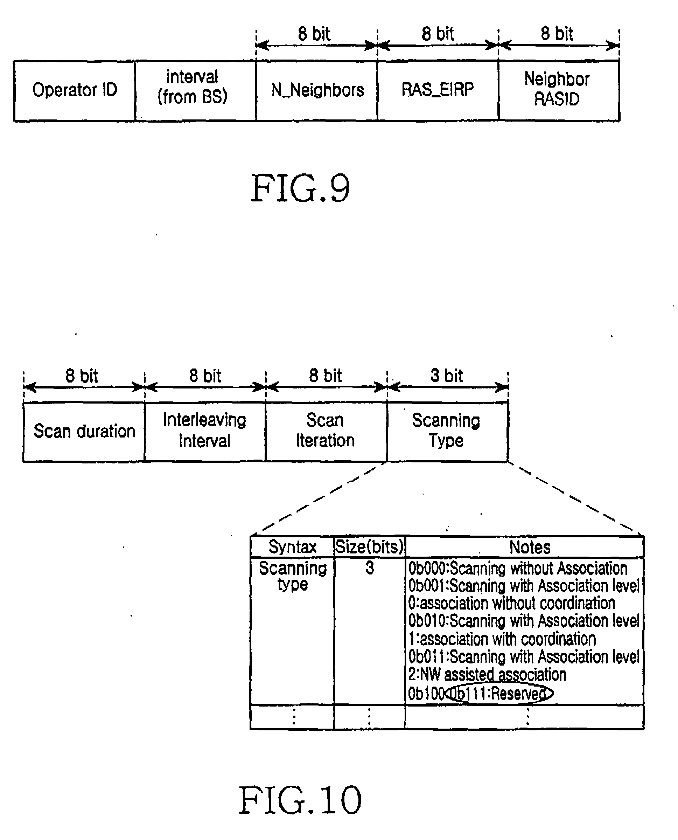

FIG. 9 illustrates the structure of the MOB_NBR_ADV message according to the present invention. Referring to FIG. 9, the MOB_NBR_ADV message includes parameters such as Operator ID, interval (from BS), N_Neighbors, RAS_EIRP, and Neighbor RASID.

Operator ID is a unique network ID used in a cell in which the terminal 100 is registered.

Interval (from BS) is the broadcasting interval of the MOB_NBR_ADV message, i.e., the transmission time interval of the MOB_NRB_ADV message in a Base Station (BS). The transmission time interval of the MOB_NRB_ADV message in the BS is up to 1 second.

N_Neighbors, composed of 8 bits, is a value combining a Base Station Identification (BSID), a preamble index, and a Downlink Channel Descriptor (DCD) of a neighboring base station.

Remote Access Server (RAS)_EIRP, composed of 8 bits, is an Effective Isotropic Radiated Power (EIRP) of a neighboring base station and has an integer value ranging between 128 dBm and +127 dBm. When a BS EIRP indicator bit is set to 0 in PHY Profile ID, the EIRP of a neighboring base station is the same as the EIRP of a main base station.

Neighbor RASID is an RAS ID parameter of least significant 24 bits included in a DL-MAP message for a neighboring base station. The Neighbor RASID field is provided only when the first bit of Skip-Optional-Field is 0.

As illustrated in FIG. 9, the MOB_NBR_ADV message includes basic information required for the terminal 100 to scan its neighboring base stations, such as the IDs and number of the neighboring base stations.

Returning again to FIG. 4, the terminal 100 receives the MOB_NBR_ADV message from the main base station 202 in step 404. The terminal 100 can acquire information about its neighboring base stations 204 and 206 from the received MOB_NBR_ADV message.

After receipt of the MOB_NBR_ADV message, the terminal 100 determines if a position measurement request is generated in step 406. The position measurement request may be generated by a need for the terminal 100 to check its position or a need for the main base station 202 to measure the position of the terminal 100. Although the terminal 100 may transmit a position measurement request message after receipt of the MOB_NBR_ADV message as mentioned above, it may also receive the MOB_NBR_ADV message after transmitting the position measurement request message. In other words, the receipt of the MOB_NBR_ADV message may precede or follow the transmission of the position measurement request message.

If the position measurement request is generated, the terminal 100 transmits a position measurement request (MOB_SCN_REQ) message to the main base station 202 in step 408. At this time, the position measurement request message is an MOB_SCN_REQ message for requesting scanning of the neighboring base stations 204 and 206, and the terminal 100 changes a field value of the MOB_SCN_REQ message to indicate that the MOB_SCN_REQ message is not intended for a hand-over, but is intended for position measurement, and transmits the MOB_SCN_REQ message to the main base station 202. For example, the terminal 100 may change code values of a scanning type field into '0b111' to indicate that the MOB_SCN_REQ message is intended for a position measurement.

FIG. 10 illustrates the structure of the MOB_SCN_REQ message according to the present invention. Referring to FIG. 10, the MOB_SCN_REQ message includes parameters such as Scan duration, Interleaving Interval, Scan Iteration, and Scanning type.

Scan duration, composed of 8 bits, indicates a scan period requested by the terminal 100. The scan period may be requested in frame units.

Interleaving Interval indicates a time interval between actual scan periods, which is required for a general communication process between the terminal 100 and the main base station 202.

Scan Iteration indicates the number of scan operations performed by the terminal 100.

In Scanning type, code values required for a hand-over are set as indicated by A. In an embodiment of the present invention, using reserved code values, the code values of Scanning type are changed to those for indicating that the MOB_SCN_REQ message is intended for a position measurement. Although the code values of Scanning type are changed in an embodiment of the present invention, code values of any other field that allows the use of reserved code values may be used.

Returning again to FIG. 4, the main base station 202 transmits the MOB_SCN_REQ message to the control station 300 in step 410. The control station 300 transmits the position measurement request message to the PDE 400 in step 412.

Upon receipt of the position measurement request message from the terminal 100 through the control station 300, the PDE 400 connects to the terminal 100 through the control station 300 in step 414.

The PDE 400 transmits a MOB_MSPOS_REQ message transmission command to the control station 300 in step 416. The MOB_MSPOS_REQ message transmission command is a command for requesting the main base station 202 to transmit an MOB_SCN_RSP message including information for scanning the neighboring base stations 204 and 206 to the terminal 100.

The control station 300 receives the MOB_MSPOS_REQ message transmission command and transmits the received MOB_MSPOS_REQ message transmission command to the main base station 202 in step 418.

The main base station 202 then transmits the MOB_SCN_RSP message to the terminal 100 in step 420. The main base station 202 transmits the MOB_SCN_RSP message to the terminal 100 after changing a specific field of the MOB_SCN_RSP message to indicate that the MOB_SCN_RSP message is intended for position measurement. For example, the main base station 202 changes the code value of Scanning type of the MOB_SCN_RSP message to '0b111'. A reserved code value of another specific field may also be used to indicate that the MOB_SCN_RSP message is intended for position measurement.

The MOB_SCN_RSP message may be directly transmitted from the main base station 202 to the terminal 100 without a need for the MOB_SCN_RSP transmission command from the PDE 400 or the control station 300.

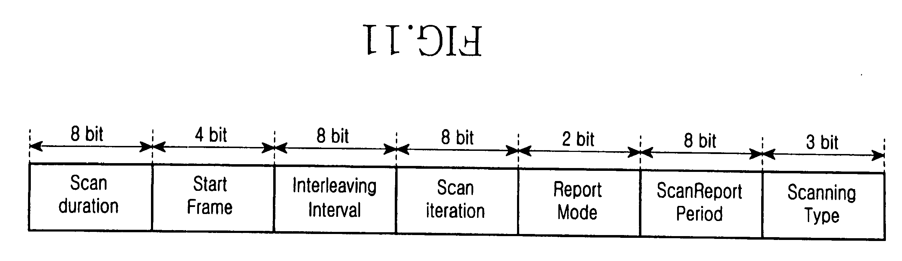

The MOB_SCN_RSP message includes information from the MOB_NBR_ADV message, which is required for scanning neighboring base stations, such as time required for a scan operation, the number of scan operations, and a scan result reporting mode. FIG. 11 illustrates the structure of the MOB_SCN_RSP message according to the present invention. Referring to FIG. 11, the MOB_SCN_RSP message includes parameters such as Scan duration, Start Frame, Interleaving Interval, Scan iteration, Report Mode, Scan Report Period, and Scanning type.

Scan duration, composed of 8 bits, is a parameter indicating a period assigned by the main base station 202 in order for the terminal 100 to scan or associate available neighboring base stations.

Start Frame, composed of 4 bits, is measured from a corresponding frame when the MOB_SCN_RSP message is received. When Start Frame is set to 0, it means that the first scan period of a next frame begins.

Interleaving Interval, composed of 8 bits, indicates an interval between scan operations when the terminal 100 operates normally.

Scan iteration, composed of 8 bits, indicates the number of intervals between scan operations.

Report Mode, composed of 2 bits, indicates a method for reporting a Carrier to Interference and Noise Ratio (CINR) of a neighboring base station measured during a scan period. When Report Mode is 00, it indicates a mode where the terminal 100 merely measures the channel quality of a neighboring Remote Access Server (RAS) without reporting. When Report Mode is 01, it indicates a mode where the terminal 100 reports a channel quality measurement result to the main base station 202 during a scan report period. When Report Mode is 10, it indicates a mode where the terminal 100 reports the channel quality measurement result to the main base station 202 at every channel quality measurement. Report Mode 11 is a reserved mode.

Scan Report Period, composed of 8 bits, indicates a period during which the terminal 100 reports the channel quality measurement result to the main base station 202.

Scanning type, composed of 3 bits, has code values for indicating that the MOB_SCN_RSP message is intended for position measurement.

Returning again to FIG. 4, upon receipt of the MOB_SCN_RSP message, the terminal 100 in step 422 scans the neighboring base stations 204 and 206 using the MOB_NBR_ADV message and the MOB_SCN_RSP message and measures relative delay information for the neighboring base stations 204 and 206 according to the scan result. For example, the terminal 100 scans the neighboring base stations 204 and 206 by receiving a BS2 base station signal from the neighboring base station 204 and a BS3 base station signal from the neighboring base stations 206 according to the information included in the MOB_SCN_RSP message and measures the relative delay information for the neighboring base stations 204 and 206 according to the scan result.

The terminal 100 encapsulates the scan result in an MOB_SCN_REPORT message and transmits the MOB_SCN_REPORT message to the main base station 202 in step 424. The MOB_SCN_REPORT message includes the relative delay information indicating differences in signal arrival between the terminal 100 and its neighboring base stations 204 and 206.

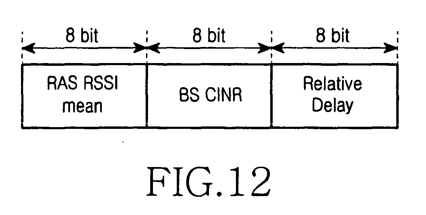

FIG. 12 illustrates the structure of the MOB_SCN_REPORT message according to the present invention. Referring to FIG. 12, the MOB_SCN_REPORT message includes parameters such as RAS RSSI mean, BS CINR, and Relative Delay.

RAS RSSI mean, composed of 8 bits, indicates a Received Signal Strength Indication of a specific base station. RAS RSSI mean is expressed in 0.5dB units and a result of subtracting 40dBm from RAS RSSI mean is the actual signal strength. For example, if RAS RSSI mean is 0xff, it indicates -104dBm and the terminal 100 reports a value ranging between -100dBm and -40dBm. RSSI measurement is performed with respect to a preamble and RAS RSSI mean is acquired by averaging measured RSSIs during a specific period.

BS CINR indicates a CINR received in a terminal from a specific base station. CINR indicates a Carrier to Interference and Noise Ratio (CINR) from a base station. BS CINR is expressed in 0.5dB units and is interpreted as a byte having a sign. CINR measurement is performed with respect to a preamble and BS CINR is acquired by averaging measured CINRs during a specific period.

Relative Delay, composed of 8 bits, indicates a relative delay between downlink signals of the main base station 202 and the neighboring bas stations 204 and 206.

Returning again to FIG. 4, the control station 300 transmits the received MOB_SCN_REPORT message to the PDE 400 in step 428.

The PDE 400 extracts the relative delay information for the neighboring base stations 204 and 206 and the base station ID information from the MOB_SCN_REPORT message received from the control station 300 in step 430 and measures the position of the terminal 100 using the relative delay information and position information of the base stations 202, 204, and 206 corresponding to the base station ID information in step 432. In other words, the PDE 400 acquires a difference between a distance between the terminal 100 and the neighboring base station 204, and a distance between the terminal 100 and the neighboring base station 206, using the relative delay information, and measures the position of the terminal 100 using a trigonometric measurement method with the relative delay information and the position information of the base stations 202, 204, and 206. At this time, the PDE 400 requires at least two pieces of relative delay information to measure the position of the terminal 100. The relative delay information includes information indicating the relative delay information of the base stations.

After calculating the position of the terminal 100, the PDE 400 may transmit the calculated position to the main base station 202 and/or the terminal 100 to allow the main base station 202 and/or the terminal 100 to know the position of the terminal 100, if necessary. The main base station 202 may use the calculated position to be synchronized with the terminal 100 when a hand-over is required for the terminal 100.

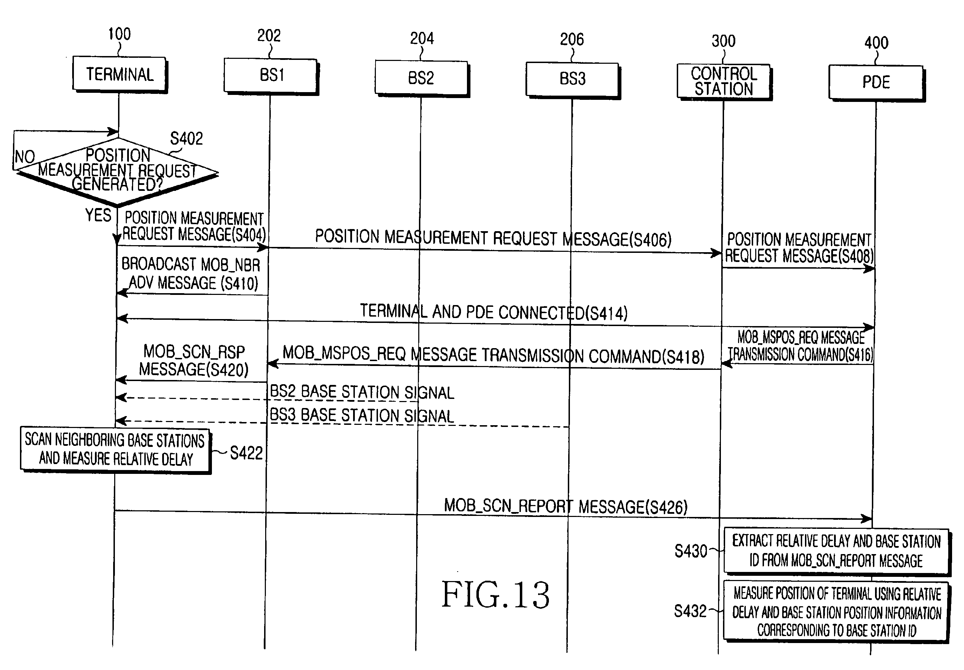

Although the terminal 100 transmits both the position measurement request and the neighboring base station scan result to the PDE 400 using a WiBro network shown in FIG. 4, the terminal 100 may transmit the position measurement request using the WiBro network and transmit the neighboring base station scan result directly to the PDE 400 using a TCP/IP network without having to be transmitted via the main base station 202 and the control station 300 as illustrated in FIG. 13.

FIG. 13 is a flowchart illustrating a position measuring method using relative delay information according to a sixth embodiment of the present invention.

In FIG. 13, after the position measurement request is generated in steps S402 through S408, the terminal 100 receives the MOB_NBR_ADV message in step S410 and transmits the MOB_SCN_REPORT message including the scan result directly to the PDE 400 in step S426. The remaining operations in FIG. 13 are the same as those in FIG. 4, and will not be further described herein.

According to another embodiment of the present invention, the terminal 100 may directly measure its position using the relative delay information for the neighboring base stations 204 and 206 and position information of the base stations 202, 204, and 206. In other words, the terminal 100 may calculate its position using its measurement value if it determines its position.

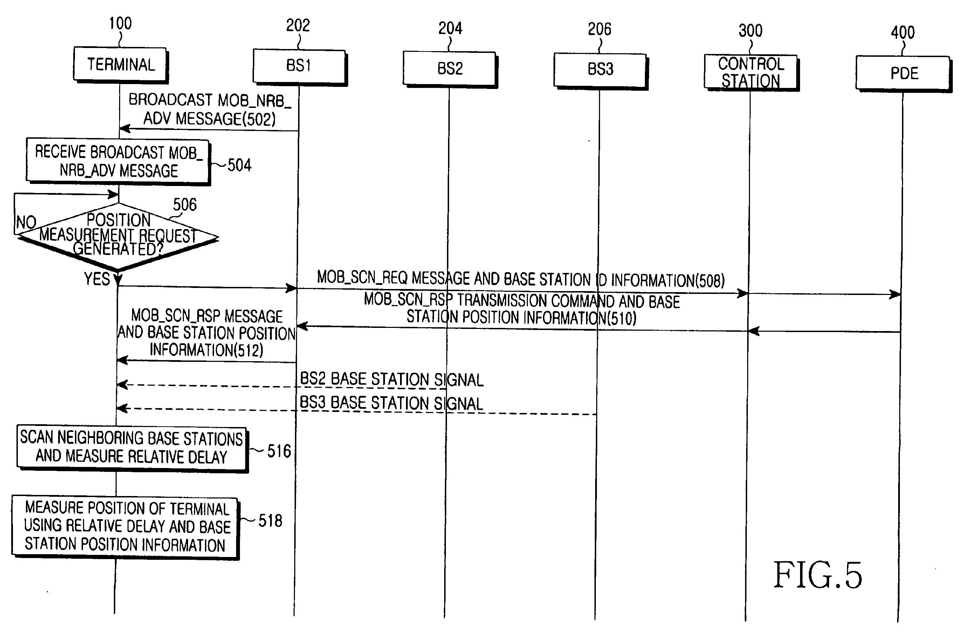

FIG. 5 is a flowchart illustrating a position measuring method using relative delay information according to a second embodiment of the present invention. Referring to FIG. 5, the main base station 202 broadcasts the MOB_NBR_ADV message including information about its neighboring base stations 204 and 206 in step 502. At this time, the MOB_NBR_ADV message may be used for a position measurement request generated by a need to measure the position of the terminal 100 or a need for the main base station 202 to secure a measurement value required for measuring the position of the terminal 100.

The terminal 100 receives the MOB_NBR_ADV message from the main base station 202 in step 504. The terminal 100 may acquire information about its neighboring base stations 204 and 206 (e.g., the IDs of the neighboring base stations 204 and 206) from the received MOB_NBR_ADV message.

After receipt of the MOB_NBR_ADV message, the terminal 100 determines whether a position measurement request is generated in step 506. The position measurement request may be generated by a need for the terminal 100 to check its position or a need for the main base station 202 to measure the position of the terminal 100.

If the position measurement request is generated, the terminal 100 transmits the MOB_SCN_REQ message for requesting neighboring base station scan information and base station ID information for requesting position information of the base stations 202, 204, and 206 to the PDE 400 through the main base station 202 and the control station 300 in step 508. At this time, the main base station 202 transmits the MOB_SCN_REQ message and base station ID information received from the terminal 100 to the control station 300. The control station 300 transmits the MOB_SCN_REQ message and the base station ID information received from the base station 202 to the PDE 400. Upon receipt of the MOB_SCN_REQ message and the base station ID information, the main base station 202, the control station 300, and the PDE 400 recognize that the neighboring base station scan information and position information of the base stations 202, 204, and 206 are requested from the terminal 100.

Upon receipt of the MOB_SCN_REQ message and the base station ID information, the PDE 400 transmits in step 510 the MOB_SCN_RSP transmission command and the position information of the base stations 202, 204, and 206 corresponding to the base station ID information to the main bas station 202 through the control station 300. At this time, the PDE 400 also transmits BS Almanac information including the time and position of each base station when transmitting the position information of each of the base stations 202, 204, and 206.

Upon receipt of the MOB_SCN_RSP transmission command and the position information of the base stations 202, 204, and 206, the main base station 202 transmits in step 512 the MOB_SCN_RSP message and the position information to the terminal 100. At this time, the MOB_SCN_RSP message is information for scanning the neighboring base stations 204 and 206 and includes time required for scanning the neighboring base stations 204 and 206, the number of scan operations, and a scan result reporting mode. The detailed structure of the MOB_SCN_RSP message has already been described with reference to FIG. 11.

The terminal 100 receives the MOB_SCN_RSP message and the position information of the base stations 202, 204, and 206 corresponding to the base station ID information, and scans in step 516 the neighboring base stations 204 and 206 according to the neighboring base station scan information included in the MOB_SCN_RSP message and measures relative delays for the neighboring base stations 204 and 206.

For example, the terminal 100 receives the BS2 base station signal and the BS3 base station signal according to the neighboring base station scan information, scans the neighboring base stations 204 and 206, and measures the relative delay information for the neighboring base stations 204 and 206 with respect to the main base station 202.

The terminal 100 measures its position using the relative delay information and the position information of the base stations 202, 204, and 206 corresponding to the base station ID information in step 518. In other words, the terminal 100 acquires a difference between a distance between the terminal 100 and the neighboring base station 204, and a distance between the terminal 100 and the neighboring base station 206, using the relative delay information, and measures its position using a trigonometric measurement method with the relative delay information and the position information of the base stations 202, 204, and 206.

In the previous embodiment of the present invention, the PDE 400 provides the position information of the base stations 202, 204, and 206 only to a specific terminal.

However, according to yet another embodiment of the present invention, the main base station 202 may broadcast its position information and position information of the neighboring base stations 204 and 206 to all terminals within a corresponding cell through cell broadcasting.

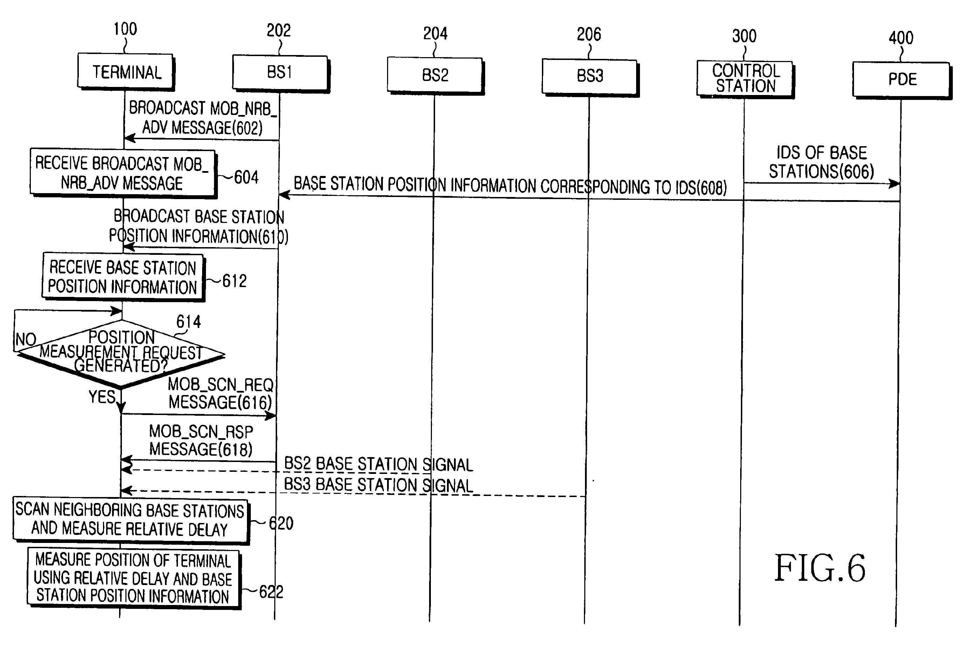

FIG. 6 is a flowchart illustrating a position measuring method using relative delay information according to a third embodiment of the present invention. Referring to FIG. 6, the main base station 202 broadcasts the MOB_NBR_ADV message including information about its neighboring base stations 204 and 206 in step 602.

The terminal 100 then receives the MOB_NBR_ADV message from the main base station 202 in step 604. The terminal 100 may acquire information about its neighboring base stations 204 and 206 (e.g., the IDs of the neighboring base stations 204 and 206) from the received MOB_NBR_ADV message.

The control station 300 knows the IDs of base stations 202, 204, and 206 and provides the IDs to the PDE 400 in step 606.

Upon receipt of the IDs from the control station 300, the PDE 400 transmits in step 608 position information of the base stations 202, 204, and 206 corresponding to the IDs to the main base station 202.

The main base station 202 receives the position information of the base stations 202, 204, and 206 corresponding to the IDs from the PDE 400 and broadcasts the received position information to a corresponding cell in step 610.

The terminal 100 receives the position information in step 612.

Upon receipt of the position information, the terminal 100 determines whether the position measurement request is generated in step 614. The position measurement request is generated by a need for the terminal 100 to check its position or a need for the main base station 202 to measure the position of the terminal 100.

If the position measurement request is generated, the terminal 100 transmits the MOB_SCN_REQ message for requesting neighboring base station scan information to the main base station 202 in step 616. The detailed structure of the MOB_SCN_REQ message is already described with reference to FIG. 10.

Upon receipt of the MOB_SCN_REQ message, the main base station 202 transmits the MOB_SCN_RSP message to the terminal 100 in step 618. At this time, the MOB_SCN_RSP message is information for scanning the neighboring base stations 204 and 206 and includes time required for scanning the neighboring base stations 204 and 206, the number of scan operations, and a scan result reporting mode. The detailed structure of the MOB_SCN_RSP message is already described with reference to FIG. 11.

Upon receipt of the MOB_SCN_RSP message from the main base station 202, the terminal 100 scans the neighboring base stations 204 and 206 according to the neighboring base station scan information included in the MOB_SCN_RSP message and measures relative delays for the neighboring base stations 204 and 206 in step 620. For example, the terminal 100 receives the BS2 base station signal and the BS3 base station signal according to the neighboring base station scan information, scans the neighboring base stations 204 and 206, and measures the relative delay information for the neighboring base stations 204 and 206 with respect to the main base station 202.

The terminal 100 in step 622 then measures its position using the relative delay information and the position information of the base stations 202, 204, and 206 corresponding to the base station ID information.

According to still another embodiment of the present invention, the position of the terminal 100 may be measured according to the position measurement request message transmitted to the terminal 100 and the main base station 202 by the PDE 400 when the PDE 400 needs to measure the position of the terminal 100.

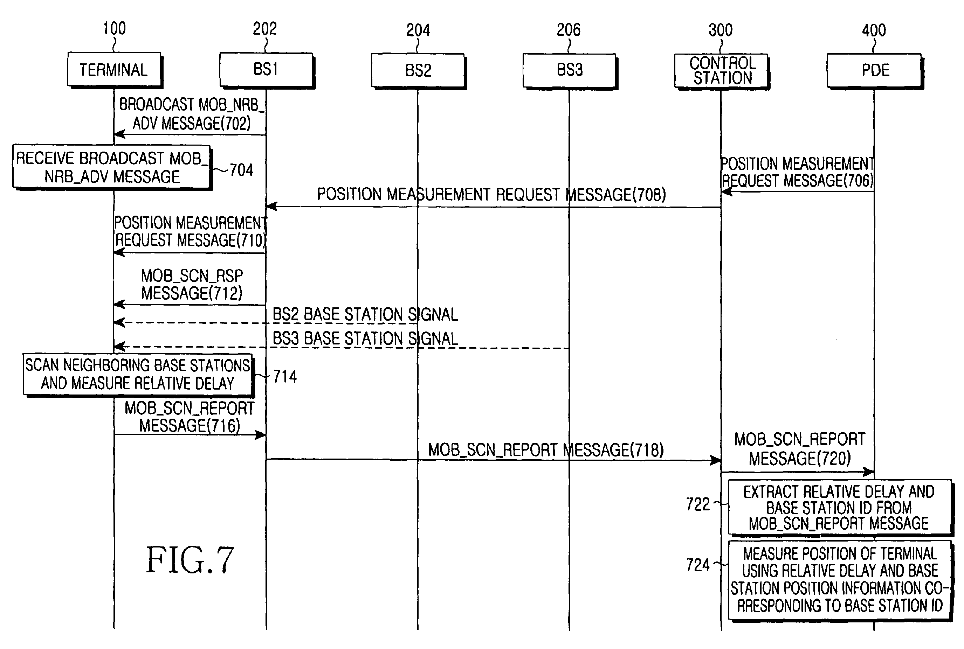

FIG. 7 is a flowchart illustrating a position measuring method using relative delay information according to a fourth embodiment of the present invention. In FIG. 7, the PDE 400 requests position measurement, and a position measurement request from the PDE 400 is transmitted to the terminal 100 via the control station 300 and the main base station 202 using a WiBro network and a neighboring base station scan result from the terminal 100 is transmitted to the PDE 400 via the control station 300 and the main base station 202 using the WiBro network.

First, position measurement for the terminal 100 begins with the transmission of a position measurement request message from the PDE 400. To this end, the PDE 400 transmits the position measurement request (MOB_MSPOS_REQ) message to the control station 300 in step 706 if a position measurement of the terminal 100 is needed. At this time, the MOB_MSPOS_REQ message includes information indicating that the position measurement request for the terminal 100 is generated and information for causing the main base station 202 to transmit the MOB_SCN_RSP message to the terminal 100.

The controls station 300 transmits the MOB_MSPOS_REQ message from the PDE 400 to the main base station 202 in step 708.

The main base station 202 transmits the received MOB_MSPOS_REQ message to the terminal 100 in step 710 and periodically broadcasts the MOB_NBR_ADV message including information about its neighboring base stations 204 and 206 in step 711. Thus, the receipt of the MOB_NBR_ADV message is passively performed in view of the terminal 100 and may precede the transmission of the MOB_MSPOS_REQ message. At this time, the MOB_NBR_ADV message may be used when the position measurement request is generated by a need to measure the position of the terminal 100 or a need for the main base station 202 to secure a measurement value required for measuring the position of the terminal 100. The main base station 202 transmits the MOB_SCN_RSP message to the terminal 100 in step 712 after changing a specific field value of the MOB_SCN_RSP message to indicate that the MOB_SCN_RSP message is intended for position measurement, as described with reference to FIG. 11.

Upon receipt of the position measurement request message from the main base station 202, the terminal 100 can recognize that the position measurement request message for requesting measurement of its position is generated from the PDE 400 and scan its neighboring base stations 204 and 206 required for the measurement using the MOB_SCN_RSP message transmitted from the main base station 202.

Upon receipt of the position measurement request message, the MOB_NBR_ADV message, and the MOB_SCN_RSP message from the main base station 202, the terminal 100 scans in step 714 the neighboring base stations 204 and 206 according to information included in the MOB_NBR_ADV message and the MOB_SCN_RSP message and measures relative delay information for the neighboring base stations 204 and 206 according to the scan result in step 714. For example, the terminal 100 scans the neighboring base stations 204 and 206 by receiving the BS2 base station signal from the neighboring base station 204 and the BS3 base station signal from the neighboring base station 206 according to the information included in the MOB_SCN_RSP message and measures the relative delay information for the neighboring base stations 204 and 206 according to the scan result.

The terminal 100 encapsulates the neighboring base station scan result and the relative delay information in the MOB_SCN_REPORT message and transmits the MOB_SCN_REPORT message to the main base station 202 in step 716.

Upon receipt of the MOB_SCN_REPORT message from the terminal 100 in step 716, the main base station 202 transmits in step 718 the received MOB_SCN_REPORT message to the controls station 300.

The control station 300 receives the MOB_SCN_REPORT message from the main base station 202 and then transmits the received MOB_SCN_REPORT message to the PDE 400 in step 720.

The PDE 400 receives the MOB_SCN_REPORT message from the control station 300, extracts in step 722 the relative delay information and the base station ID information, and measures in step 724 the position of the terminal 100 using the relative delay information and the position information of the base stations 202, 204, and 206 corresponding to the base station ID information. For example, the PDE 400 acquires a difference between a distance between the terminal 100 and the neighboring base station 204, and a distance between the terminal 100 and the neighboring base station 206, using the relative delay information, and measures the position of the terminal 100 using a trigonometric measurement method with the relative delay information and the position information of the base stations 202, 204, and 206.

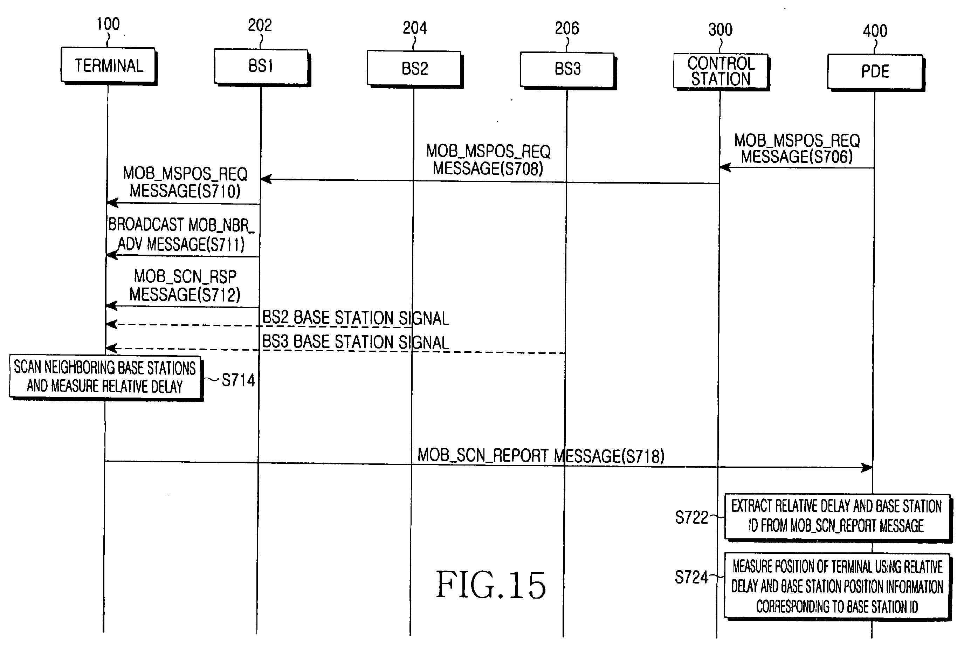

Unlike in FIG. 7, the PDE 400 may transmit the position measurement request to the terminal 100 using the WiBro network and the terminal 100 may transmit the neighboring base station scan result directly to the PDE 400 using a TCP/IP network as illustrated in FIG. 15. Referring to FIG. 15, the MOB_SCN_REPORT message including the neighboring base station scan result is directly to the PDE 400 from the terminal 100 in step S718. FIG. 15 is a flowchart illustrating a position measuring method using relative delay information according to an eighth embodiment of the present invention. Steps S706 through S714 of FIG. 15 are the same as steps 706 through 714 of FIG. 7 and steps S722 and S724 are similar to steps S722 and S724.

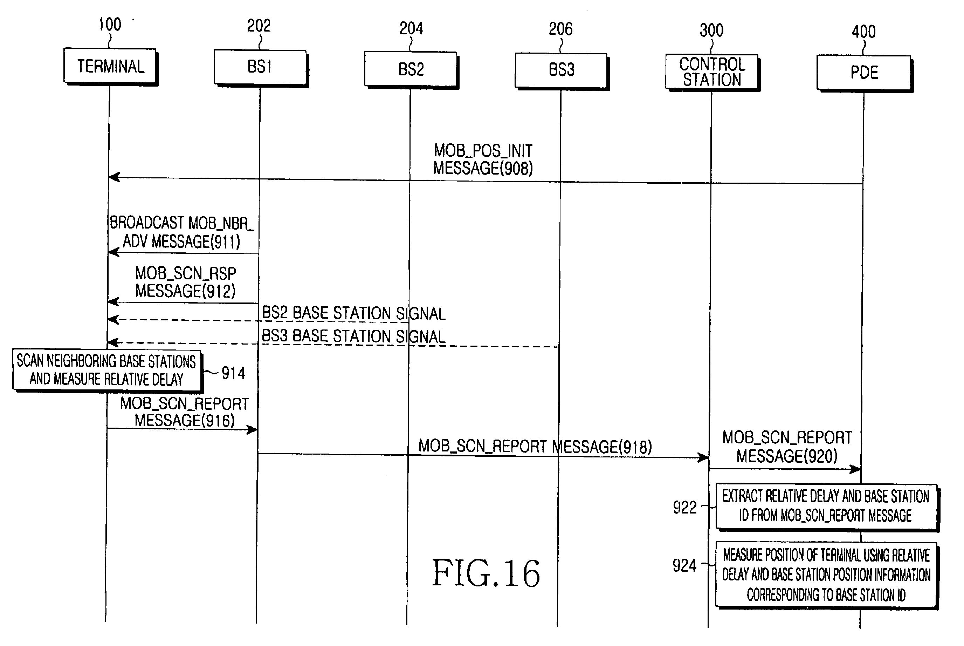

Unlike in FIG. 7, the PDE 400 may transmit the position measurement request to the terminal 100 using a TCP/IP network and the terminal 100 may transmit the neighboring base station scan result to the PDE 400 using a WiBro network via the main base station 202 and the control station 300, as illustrated in FIG. 16. Referring to FIG. 16, a position measurement request (MOB_POS_INIT) message is transmitted directly to the terminal 100 from the PDE 400 using a TCP/IP network in step S908. FIG. 16 is a flowchart illustrating a position measuring method using relative delay information according to a ninth embodiment of the present invention. Steps 911 through 924 of FIG. 16 are the same as steps 711 through 724 of FIG. 7, respectively, and will not be further described herein.

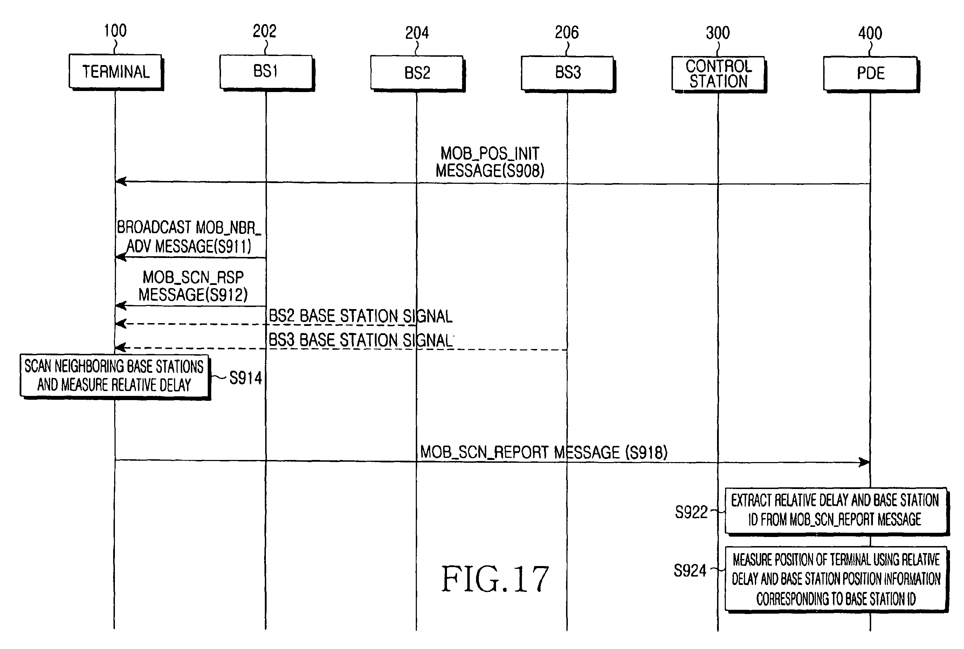

The PDE 400 may transmit the position measurement request to the terminal 100 using a TCP/IP network and the terminal 100 may transmit the neighboring base station scan result to the PDE 400 using the TCP/IP network, as illustrated in FIG. 17. FIG. 17 is a flowchart illustrating a position measuring method using relative delay information according to a tenth embodiment of the present invention. Steps S908 through S914 of FIG. 17 are the same as steps 908 through 914 of FIG. 16 and steps S918 through S924 of FIG. 17 are the same as steps S718 through S724 of FIG. 15, respectively.

According to still another embodiment of the present invention, the terminal 100 may transmit the position measurement request message to the PDE 400 using Internet Protocol (IP).

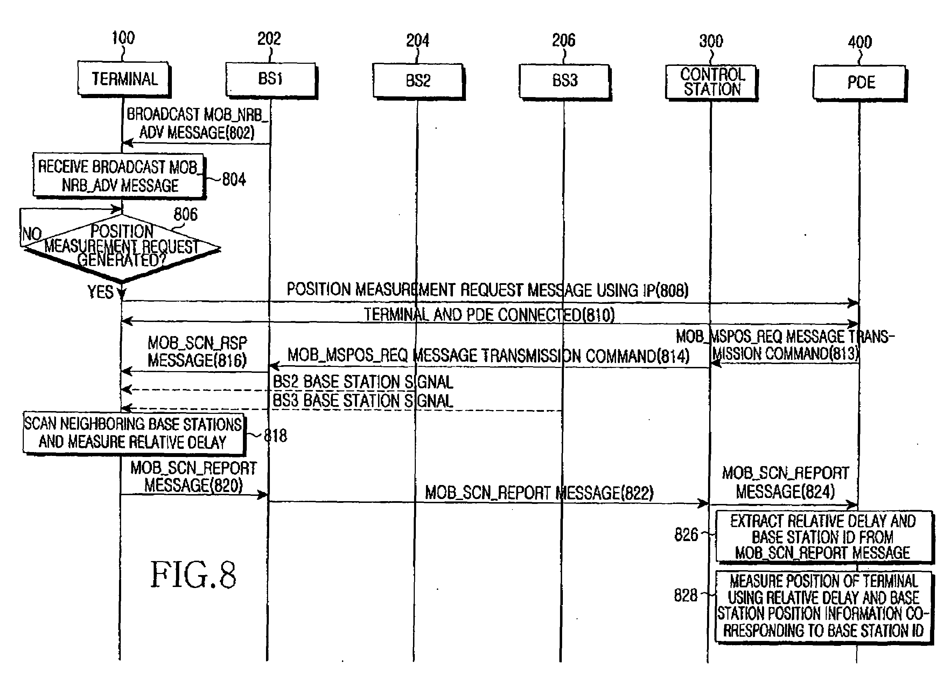

FIG. 8 is a flowchart illustrating a position measuring method using relative delay information according to a fifth embodiment of the present invention. In FIG. 8, the terminal 100 request position measurement, and the position measurement request from the terminal 100 is transmitted directly to the PDE 400 using a TCP/IP network and the neighboring base station scan result is transmitted from the terminal 100 to the PDE 400 via the main base station 202 and the control station 300 using a WiBro network.

Referring to FIG. 8, the MOB_NBR_ADV message is periodically broadcast by the main base station 202 in step 802. After receipt of the MOB_NBR_ADV message in step 804 and determining in step 806 of the position measurement request has been generated, the terminal 100 transmits the position measurement request message to the PDE 400 using IP in step 808 if it determines that it is necessary to measure its position. Steps 810 through 828 are then performed to measure the position of the terminal 100. Since steps 810 through 828 of FIG. 8 are the same as steps 414 through 432 of FIG. 4, they will not be further described herein.

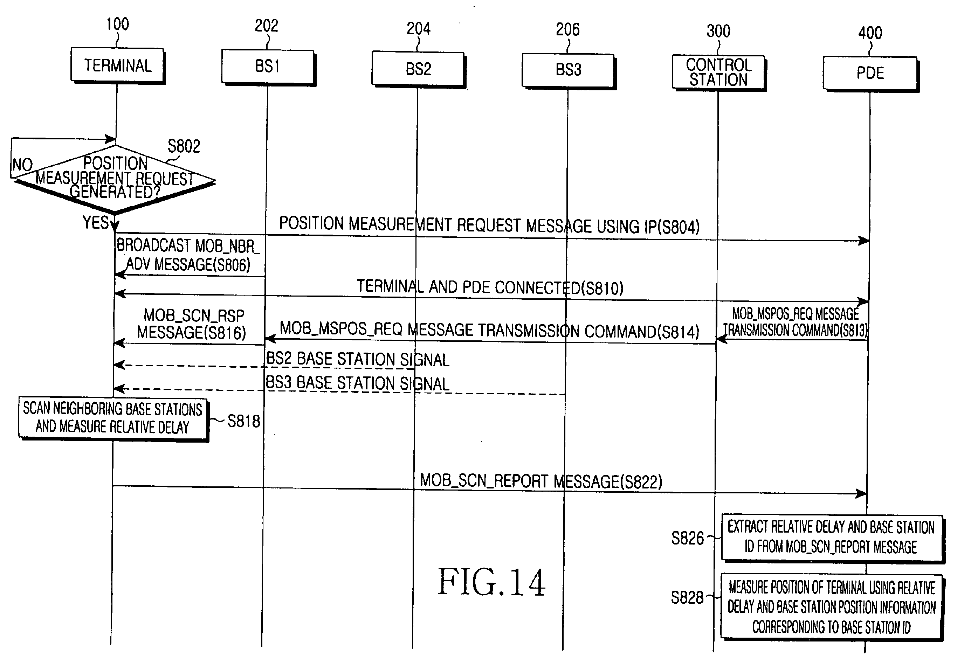

FIG. 14 is a flowchart illustrating a position measuring method using relative delay information according to a seventh embodiment of the present invention. In FIG. 14, the terminal 100 requests position measurement, and both the position measurement request and the neighboring base station result from the terminal 100 are transmitted directly to the PDE 400 using a TCP/IP network. Thus, referring to FIG. 14, if the position measurement request is generated in step S802, a position measurement request (MOB_POS_START) message is transmitted to the PDE 400 in step S804. The MOB_NBR_ADV message is received in step S806 and the MOB_SCN_REPORT message is transmitted from the terminal 100 directly to the PDE 400 in step S822. The remaining operations in FIG. 14 are the same as those in FIG. 8 and will not be further described herein.

As described above, according to the present invention, by using relative delay information of a conventional WiBro system, position measurement can be easily performed.

Moreover, since the position of a terminal is measured using a parameter used for a hand-over, additional data measurement is not required for the position measurement.

Furthermore, efficiency in the use of a parameter of a WiBro system can be improved by using a parameter previously used only in a hand-over for position measurement.

While the present invention has been shown and described with reference to preferred embodiments thereof, it will be understood that the scope of the invention is defined by the appended claims.

## Claims

1. A position measuring system for a Wireless Broadband, WiBro, system, comprising:
a terminal (100) for transmitting a WiBro MOB_SCN_REQ message to a main base station, wherein the terminal is configured to change a field value of the MOB_SCN_REQ message to indicate that the MOB_SCN_REQ message is intended for position measurement, receiving information required for scanning neighboring base stations (204, 206) via a WiBro MOB_SCN_RSP message, scanning the neighboring base stations (204, 206) and transmitting a neighboring base station scan result to a position determination entity (400) via a WiBro MOB_SCN_REPORT message including relative delay information indicating a difference between a time required for a downlink signal of the main base station to arrive in the terminal and time required for a downlink signal of the neighboring base stations to arrive in the terminal;
the main base station (202) for receiving the MOB_SCN_REQ message from the terminal and transmitting the MOB_SCN_RSP message to the terminal; and
a position determination entity (400) for receiving the MOB_SCN_REPORT message and measuring the position of the terminal (100) using the relative delay information and base station position information.

2. The position measuring system of claim 1, wherein there are at least two pieces of relative delay information.

3. The position measuring system of claim 1 or 2, wherein the position determination entity (400) measures the position of the terminal (100) using a distance difference between the terminal (100) and the neighboring base stations (204, 206), the distance difference acquired using the relative delay information and the base station position information.

4. The position measuring system of one of claims 1 to 3, wherein the position determination entity (480) stores the base station position information corresponding to base station ID information.

5. The position measuring system of claim 3, wherein the position determination entity (400) extracts the relative delay information and base station ID information from the neighboring base station scan result.

6. The position measuring system of claim 5, wherein the position determination entity (400) measures the position of the terminal (100) using the relative delay information and base station position information corresponding to the base station ID information.

7. The position measuring system of claim 1 or 2, wherein the position determination entity (400) measures the position of the terminal (100) using a trigonometric measurement method.

8. The position measuring system of one of claims 1 to 7, further comprising a control station (300) located between the main base station (202) and the position determination entity (400) for receiving the WiBro MOB_SCN_REPORT message from the main base station (202) and providing the WiBro MOB_SCN_REPORT message to the position determination entity (300).

9. The position measuring system of one of claims 1 to 8, wherein the terminal (100) transmits the WiBro MOB_SCN_REQ message to the main base station (202) in response to a determination that a position measurement request is generated.

10. The position measuring system of one of claims 1 to 9, wherein the terminal (100) communicates with the position determination entity (400) using an internet protocol.

11. The position measuring system of one of claims 1 to 8, wherein the position determination entity (400) provides to the terminal (100) the WiBro MOB_SCN_RSP message through the main base station (202) in response to receiving the the WiBro MOB_SCN_REQ message via the main base station (202).

12. A position measuring method for a Wireless Broadband, WiBro, system, comprising the steps of:
transmitting (408), by a terminal, a WiBro MOB_SCN_REQ message to a main base station, wherein the terminal changes a field value of the MOB_SCN_REQ message to indicate that the MOB_SCN_REQ message is intended for position measurement;
providing (420), by the main base station, information required for scanning neighboring base stations to the terminal via a WiBro MOB_SCN_RSP message;
scanning (422), by the terminal, the neighboring base stations and transmitting (424, 426, 428) by the terminal a neighboring base station scan result to a position determination entity via a WiBro MOB_SCN_REPORT message including relative delay information indicating a difference between a time required for a downlink signal of the main base station to arrive in the terminal and time required for a downlink signal of the neighboring base stations to arrive in the terminal; and
measuring (432), by the position determination entity, the position of the terminal using the relative delay information and previously stored base station position information.

13. The position measuring method of claim 12, wherein there are at least two pieces of relative delay information.

14. The position measuring method of claim 12 or 13, wherein the position determination entity measures (432) the position of the terminal using a distance difference between the terminal and the neighboring base stations acquired using the relative delay information and the base station position information.

15. The position measuring method of claim 14, wherein the step of measuring (432) the position of the terminal using the distance difference uses a trigonometric measurement method.

16. The position measuring method of one of claims 12 to 15, wherein the terminal transmits (408) the WiBro MOB_SCN_REQ message to the main base station in response to a determination (406) that a position measurement request is generated.

17. The position measuring method of one of claims 12 to 16, wherein the WiBro MOB_SCN_REQ message received by the main base station is transmitted (410, 412) to the position determination entity which in response transmits (418) to the main base station the WiBro MOB_SCN_RSP message.

18. The position measuring method of one of claims 12 to 17, wherein the terminal communicates with the position determination entity using internet protocol.

19. The position measuring method of one of claims 12 to 18, further comprising the step of receiving (426) by a control station located between the main base station and the position determination entity the WiBro MOB_SCN_REPORT message from the main base station and providing (428) by the control station the received WiBro MOB_SCN_REPORT message to the position determination entity.

20. The position measuring method of one of claims 12 to 14, wherein the step of measuring the position of the terminal comprises the steps of:
extracting (430) the relative delay information and base station ID information from the received WiBro MOB_SCN_REPORT message; and
measuring (432) the position of the terminal using the extracted relative delay information and the base station position information corresponding to the base station ID information.

## Patentansprüche

1. Positionsmesssystem für ein Drahtlos-Breitbandsystem (WiBro system), das umfasst:
ein Endgerät (100), mit dem eine WiBro MOB_SCN_REQ-Nachricht zu einer Haupt-Basisstation gesendet wird, wobei das Endgerät so konfiguriert ist, dass es einen Feldwert der MOB_SCN_REQ-Nachricht ändert, um anzuzeigen, dass die MOB_SCN_REQ-Nachricht für Positionsmessung vorgesehen ist, mit dem Informationen, die erforderlich sind, um benachbarte Basisstationen (204, 206) abzutasten, über eine WiBro MOB_SCN_RSP-Nachricht empfangen werden, die benachbarten Basisstationen (204, 206) abgetastet werden und ein Ergebnis des Abtastens benachbarter Basisstationen über eine WiBro MOB_SCN_REPORT-Nachricht, die Informationen über relative Verzögerung enthält, die eine Differenz zwischen einer Zeit, die ein Downlink-Signal der Haupt-Basisstation benötigt, um in dem Endgerät einzutreffen, und einer Zeit anzeigen, die ein Downlink-Signal der benachbarten Basisstationen benötigt, um in dem Endgerät einzutreffen, zu einer Positionsbestimmungseinheit (400) gesendet wird;
die Haupt-Basisstation (202), mit der die MOB_SCN_REQ-Nachricht von dem Endgerät empfangen wird und die MOB_SCN_RSP-Nachricht zu dem Endgerät gesendet wird; und
eine Positionsbestimmungseinheit (400), mit der die MOB_SCN_REPORT-Nachricht empfangen wird und die Position des Endgerätes (100) unter Verwendung der Informationen über relative Verzögerung und von Basisstations-Positionsinformationen gemessen wird.

2. Positionsmesssystem nach Anspruch 1, wobei es wenigstens zwei Elemente von Informationen über relative Verzögerung gibt.

3. Positionsmesssystem nach Anspruch 1 oder 2, wobei die Positionsbestimmungseinheit (400) die Position des Endgerätes (100) unter Verwendung einer Entfernungsdifferenz zwischen dem Endgerät (100) und den benachbarten Basisstationen (204, 206) misst und die Entfernungsdifferenz unter Verwendung der Informationen über relative Verzögerung und der Basisstations-Positionsinformationen ermittelt wird.

4. Positionsmesssystem nach einem der Ansprüche 1 bis 3, wobei die Positionsbestimmungseinheit (480) die Basisstations-Positionsinformationen speichert, die den Basisstations-Kennungsinformationen entsprechen.

5. Positionsmesssystem nach Anspruch 3, wobei die Positionsbestimmungseinheit (400) die Informationen über relative Verzögerung und die Basisstations-Kennungsinformationen aus dem Ergebnis des Abtastens benachbarter Basisstationen extrahiert.

6. Positionsmesssystem nach Anspruch 5, wobei die Positionsbestimmungseinheit (400) die Position des Endgerätes (100) unter Verwendung der Informationen über relative Verzögerung und der Basisstations-Positionsinformationen misst, die den Basisstations-Kennungsinformationen entsprechen.

7. Positionsmesssystem nach Anspruch 1 oder 2, wobei die Positionsbestimmungseinheit (400) die Position des Endgerätes (100) unter Verwendung eines trigonometrischen Messverfahrens misst.

8. Positionsmesssystem nach einem der Ansprüche 1 bis 7, das des Weiteren eine Steuerstation (300) umfasst, die sich zwischen der Haupt-Basisstation (202) und der Positionsbestimmungseinheit (400) befindet, und mit der die WiBro MOB_SCN_REPORT-Nachricht von der Haupt-Basisstation (202) empfangen wird und die WiBro MOB_SCN_REPORT-Nachricht der Positionsbestimmungseinheit (300) bereitgestellt wird.

9. Positionsmesssystem nach einem der Ansprüche 1 bis 8, wobei das Endgerät (100) die WiBro MOB_SCN_REQ-Nachricht in Reaktion auf eine Feststellung dahingehend, dass eine Positionsmess-Anforderung erzeugt wird, zu der Haupt-Basisstation (202) sendet.

10. Positionsmesssystem nach einem der Ansprüche 1 bis 9, wobei das Endgerät (100) mit der Positionsbestimmungseinheit (400) unter Verwendung eines Internet-Protokolls kommuniziert.

11. Positionsmesssystem nach einem der Ansprüche 1 bis 8, wobei die Positionsbestimmungseinheit (400) dem Endgerät (100) in Reaktion auf Empfang der WiBro MOB_SCN_REQ-Nachricht über die Haupt-Basisstation (202) die WiBro MOB_SCN_RSP-Nachricht über die Haupt-Basisstation (202) bereitstellt.

12. Positionsmessverfahren für ein Drahtlos-Breitbandsystem (WiBro system), das die folgenden Schritte umfasst:
Senden (408) einer WiBro MOB_SCN_REQ-Nachricht durch ein Endgerät zu einer Basisstation, wobei das Endgerät einen Feldwert der MOB_SCN_REQ-Nachricht ändert, um anzuzeigen, dass die MOB_SCN_REQ-Nachricht für Positionsmessung vorgesehen ist;
Bereitstellen (420) von Informationen, die erforderlich sind, um benachbarte Basisstationen abzutasten, für das Endgerät durch die Haupt-Basisstation über eine WiBro MOB_SCN_RSP-Nachricht;
Abtasten (422) der benachbarten Basisstationen durch das Endgerät und Senden (424, 426, 428) eines Ergebnisses des Abtastens benachbarter Basisstationen durch das Endgerät zu einer Positionsbestimmungseinheit über eine WiBro MOB_SCN_REPORT-Nachricht, die Informationen über relative Verzögerung enthält, die eine Differenz zwischen einer Zeit, die ein Downlink-Signal der Haupt-Basisstation benötigt, um in dem Endgerät einzutreffen, und einer Zeit anzeigt, die ein Downlink-Signal der benachbarten Basisstationen benötigt, um in dem Endgerät einzutreffen; und
Messen (432) der Position des Endgerätes unter Verwendung der Informationen über relative Verzögerung und zuvor gespeicherter Basisstations-Positionsinformationen durch die Positionsbestimmungseinheit.

13. Positionsmessverfahren nach Anspruch 12, wobei es wenigstens zwei Elemente von Informationen über relative Verzögerung gibt.

14. Positionsmessverfahren nach Anspruch 12 oder 13, wobei die Positionsbestimmungseinheit die Position des Endgerätes unter Verwendung einer Entfernungsdifferenz zwischen dem Endgerät und den benachbarten Basisstationen misst (432), die unter Verwendung der Informationen über relative Verzögerung und der Basisstations-Positionsinformationen ermittelt wird.

15. Positionsmessverfahren nach Anspruch 14, wobei beim Schritt des Messens (432) der Position des Endgerätes unter Verwendung der Entfernungsdifferenz ein trigonometrisches Messverfahren verwendet wird.

16. Positionsmessverfahren nach einem der Ansprüche 12 bis 15, wobei das Endgerät die WiBro MOB_SCN_REQ-Nachricht in Reaktion auf eine Feststellung (406) dahingehend, dass eine Positionsmess-Anforderung erzeugt wird, zu der Haupt-Basisstation sendet (408).

17. Positionsmessverfahren nach einem der Ansprüche 12 bis 16, wobei die durch die Haupt-Basisstation empfangene WiBro MOB_SCN_REQ-Nachricht zu der Positionbestimmungseinheit gesendet wird (410, 412), die in Reaktion darauf die WiBro MOB_SCN_RSP-Nachricht zu der Haupt-Basisstation sendet (418).

18. Positionsmessverfahren nach einem der Ansprüche 12 bis 17, wobei das Endgerät mit der Positionsbestimmungseinheit unter Verwendung eines Internet-Protokolls kommuniziert.

19. Positionsmessverfahren nach einem der Ansprüche 12 bis 18, das des Weiteren den Schritt des Empfangens (426) der WiBro MOB_SCN_REPORT-Nachricht von der Haupt-Basisstation durch eine Steuerstation, die sich zwischen der Haupt-Basisstation und der Positionsbestimmungseinheit befindet, und des Bereitstellens (428) der empfangenen WiBro MOB_SCN_REPORT-Nachricht für die Positionsbestimmungseinheit durch die Steuerstation umfasst.

20. Positionsmessverfahren nach einem der Ansprüche 12 bis 14, wobei der Schritt des Messens der Position des Endgerätes die folgenden Schritte umfasst:
Extrahieren (430) der Informationen über relative Verzögerung und Basisstations-Kennungsinformationen aus der empfangenen WiBro MOB_SCN_REPORT-Nachricht; und
Messen (432) der Position des Endgerätes unter Verwendung der extrahierten relativen Verzögerungsinformationen und der Basisstations-Positionsinformationen, die den Basisstations-Kennungsinformationen entsprechen.

## Revendications

1. Système de mesure de position destiné à un système sans fil à Large Bande, WiBro (pour Wireless Broadband), comprenant :
un terminal (100) destiné à transmettre un message WiBro MOB_SCN_REQ à une station de base, dans lequel le terminal est configuré pour modifier une valeur de champ du message MOB_SCN_REQ afin d'indiquer que le message MOB_SCN_REQ est destiné à une mesure de position, à recevoir les informations requises pour rechercher des stations de base voisines (204, 206) par l'intermédiaire d'un message WiBro MOB_SCN_RSP, à rechercher les stations de base voisines (204, 206) et à transmettre un résultat de recherche de stations de base voisines à une entité de détermination de position (400) par l'intermédiaire d'un message WiBro MOB_SCN_REPORT contenant des informations de retard relatif indiquant une différence entre un temps mis par un signal de liaison descendante de la station de base principale pour atteindre le terminal et le temps mis par un signal de liaison descendante des stations de base voisines pour atteindre le terminal ;
la station de base principale (202) destinée à recevoir le message MOB_SCN_REQ du terminal et à transmettre le message MOB_SCN_RSP au terminal ; et
une entité de détermination de position (400) destinée à recevoir le message MOB_SCN_REPORT et à mesurer la position du terminal (100) en utilisant les informations de retard relatif et les informations de position des stations de base.

2. Système de mesure de position selon la revendication 1, dans lequel il y a au moins deux informations de retard relatif.

3. Système de mesure de position selon la revendication 1 ou 2, dans lequel l'entité de détermination de position (400) mesure la position du terminal (100) en utilisant une différence de distance entre le terminal (100) et les stations de base voisines (204, 206), la différence de distance étant acquise en utilisant les informations de retard relatif et les informations de position des stations de base.

4. Système de mesure de position selon l'une des revendications 1 à 3, dans lequel l'entité de détermination de position (480) stocke les informations de position des stations de base correspondant aux informations d'ID des stations de base.

5. Système de mesure de position selon la revendication 3, dans lequel l'entité de détermination de position (400) extrait les informations de retard relatif et les informations d'ID des stations de base du résultat de la recherche de stations de base voisines.

6. Système de mesure de position selon la revendication 5, dans lequel l'entité de détermination de position (400) mesure la position du terminal (100) en utilisant les informations de retard relatif et les informations de position des stations de base correspondant aux information d'ID des stations de base.

7. Système de mesure de position selon la revendication 1 ou 2, dans lequel l'entité de détermination de position (400) mesure la position du terminal (100) en utilisant un procédé de mesure trigonométrique.

8. Système de mesure de position selon l'une des revendications 1 à 7, comprenant en outre une station de commande (300) située entre la station de base principale (202) et l'entité de détermination de position (400), destinée à recevoir le message WiBro MOH_SCN_REPORT de la station de base principale (202) et à fournir le message WiBro MOB_SCN_REPORT à l'entité de détermination de position (300).

9. Système de mesure de position selon l'une des revendications 1 à 8, dans lequel le terminal (100) transmet le message WiBro MOB_SCN_REQ à la station de base principale (202) en réponse à une détermination du fait qu'une demande de mesure de position a été générée.

10. Système de mesure de position selon l'une des revendications 1 à 9, dans lequel le terminal (100) communique avec l'entité de détermination de position (400) en utilisant un protocole internet.

11. Système de mesure de position selon l'une des revendications 1 à 8, dans lequel l'entité de détermination de position (400) fournit au terminal (100) le message WiBro MOB_SCN_RSP par l'intermédiaire de la station de base principale (202) en réponse à la réception du message WiBro MOB_SCN_REQ par l'intermédiaire de la station de base principale (202).

12. Procédé de mesure de position destiné à un système Sans fil à Large Bande; WiBro (pour Wireless Broadband), comprenant les étapes :
de transmission (408) par un terminal d'un message WiBro MOB_SCN_REQ à une station de base principale, dans lequel le terminal modifie une valeur de champ du message MOB_SCN_REQ pour indiquer que le message MOB_SCN_REQ est destiné à une mesure de position ;
de fourniture (420) au terminal par la station de base principale d'informations requises pour la recherche de stations de base voisines par l'intermédiaire d'un message WiBro MOB_SCN_RSP ;
de recherche (422) par le terminal des stations de base voisines et de transmission (424, 426, 428) par le terminal du résultat d'une recherche de stations de base voisines à une entité de détermination de position par l'intermédiaire d'un message WiBro MOB_SCN_REPORT contenant des informations de retard relatif indiquant une différence entre un temps mis par un signal de liaison descendante de la station de base principale pour atteindre le terminal et le temps mis par un signal de liaison descendante des stations de base voisines pour atteindre le terminal ; et
de mesure (432) par l'entité de détermination de position de la position du terminal en utilisant les informations de retard relatif et des informations de position de stations de base précédemment stockées.

13. Procédé de mesure de position selon la revendication 12, dans lequel il y a au moins deux informations de retard relatif.

14. Procédé de mesure de position selon la revendication : 12 ou 13, dans lequel l'entité de détermination de position mesure (432) la position du terminal en utilisant une différence de distance entre le terminal et les stations de base voisines acquises à l'aide des informations de retard relatif et des informations de position des stations de base.

15. Procédé de mesure de position selon la revendication 14, dans lequel l'étape de mesure (432) de la position du terminal en utilisant la différence de distance utilise un procédé de mesure trigonométrique.

16. Procédé de mesure de position selon l'une des revendications 12 à 15, dans lequel le terminal transmet (408) à la station de base le message WiBro MOB_SCN_REQ en réponse à une détermination (406) du fait qu'une demande de mesure de position a été générée.

17. Procédé de mesure de position selon l'une des revendications 12 à 16, dans lequel le message WiBro MOB_SCN_REQ reçu par la station principale est transmis (410, 412) à l'entité de détermination de position qui, en réponse, transmet (418) à la station de base principale le message WiBro MOB_SCN_RSP.

18. Procédé de mesure de position selon l'une des revendications 12 à 17, dans lequel le terminal communique avec l'entité de détermination de position en utilisant un protocole internet.

19. Procédé de mesure de position selon l'une des revendications 12 à 18, comprenant en outre l'étape de réception (426) par une station de commande située entre la station de base principale et l'entité de détermination de position du message WiBro MOB_SCN_REPORT en provenance de la station de base principale et de fourniture (428) par la station de commande du message WiBro MOB_SCN REPORT reçu à l'entité de détermination de position.

20. Procédé de mesure de position selon l'une des revendications 12 à 14, dans lequel l'étape de mesure de la position du terminal comprend les étapes :
d'extraction (430) des informations de retard relatif et des informations d'ID des stations de base du message WiBro MOH SCN REPORT reçu ; et
de mesure (432) de la position du terminal en utilisant les informations de retard relatif extraites et les informations de position des stations de base correspondant aux informations d'ID des stations de base.
